# EUROPEAN PATENT SPECIFICATION

(11) **EP 2 066 098 B1**
(45) Date of publication and mention of the grant of the patent: **25.05.2016**
(21) Application number: 07023292.1
(22) Date of filing: 30.11.2007
(51) Int. Cl.: H04W 80/10, H04L 29/08, H04L 29/06

(54) **Allocation of a serving entity in a communication network**
Zuordnung eines Bereitstellungsobjekts in einem Kommunikationsnetzwerk
Affectation d'une entité de service dans un réseau de communication

(43) Date of publication of application: 03.06.2009
(73) Proprietor: Nokia Solutions and Networks Oy, 02610 Espoo (FI)
(72) Inventor: Milinski, Alexander, 81371 München (DE); Rajko, Zsolt, 1174 Budapest (HU); Shen, Jiadong, 81379 München (DE); Varga, Joszef, 7985 Nagydobsza (HU)
(74) Representative: Borgström, Markus

(56) References cited:
- WO-A-03/061236
- WO-A-2004/054302
- WO-A-2006/016839

## Description

### Technical field of the invention:

The invention relates to a method, a control entity and a serving entity for allocating a second serving entity for a registered user when a first serving entity, which is still available, has already been allocated to the user

### Background of the invention:

Within the IP (Internet Protocol) Multimedia Subsystem (IMS) as defined by 3^{rd} Generation Partnership Project (3GPP) Session Initiation Protocol (SIP) defined by Internet Engineering Task Force (IETF) is used for controlling communication. SIP is an application-layer control protocol for creating, modifying, and terminating sessions with one or more participants. These sessions may include Internet multimedia conferences, Internet telephone calls, and multimedia distribution. Members in a session can communicate via multicast or via a mesh of unicast relations, or a combination of these. Diameter protocol has been defined by IETF and is intended to provide an Authentication, Authorization and Accounting (AAA) framework for applications such as network access or IP mobility.

Different types network entities and functions exist in the IMS network. Call Session Control Functions (CSCF) implement a session control function in SIP layer. The CSCF can act as Proxy CSCF (P-CSCF), Serving CSCF (S-CSCF) or Interrogating CSCF (I-CSCF). The P-CSCF is the first contact point for the User Equipment (UE) within the IMS; the S-CSCF actually handles the session states in the network; the I-CSCF is mainly the contact point within an operator's network for all IMS connections destined to a subscriber of that network operator, or a roaming subscriber currently located within that network operator's service area.

The functions performed by the I-CSCF are, for example, assigning an S-CSCF to a user performing SIP registration and routing SIP requests received from another network towards the S-CSCF. The S-CSCF performs the session control services for the UE. It maintains a session state as needed by the network operator for support of the services and may be acting as Registrar, i.e. it accepts registration requests and makes its information available through the location server (e.g. HSS). The S-CSCF is the central point to users that are hosted by this S-CSCF. The S-CSCF provides services to registered and unregistered users when it is assigned to these users. This assignment is stored in the Home Subscriber Server (HSS).

The HSS is the master database for a given user. It is the entity containing the subscription-related information to support the network entities actually handling calls/sessions. As an example, the HSS provides support to the call control servers (CSCFs) in order to complete the routing/roaming procedures by solving authentication, authorisation, naming/addressing resolution, location dependencies, etc.

The HSS is responsible for holding the following user related information:
- User Identification, Numbering and addressing information
- User Security information: Network access control information for authentication and authorization, such as password information
- User Location information at inter-system level: the HSS supports the user registration, and stores inter-system location information, etc.
- User profile information.

Document WO 2003/061236 discloses a method and system for changing subscription information of a subscriber in a data network. When a subscriber profile or subscription information is changed or updated, this is detected and a registration procedure for registering a terminal device of the subscriber to a new serving network element is initiated in response to the result of a checking step for checking whether a capability of a network element serving a terminal device of said subscriber is still in accordance with said changed subscription information.

Document WO 2006/016839 provides a method and enhanced servers for re-assigning the second S-CSCF, whereby the still ongoing sessions for the user in the first S-CSCF are kept alive.

WO 2004/054302 provides a system and a method to the support for multiple registrations of a user identified by a global identity and a number of subscriber directory identities in different S-CSCFs, each of these registrations in different S-CSCFs carried out with a different subscriber directory identity, or combinations thereof.

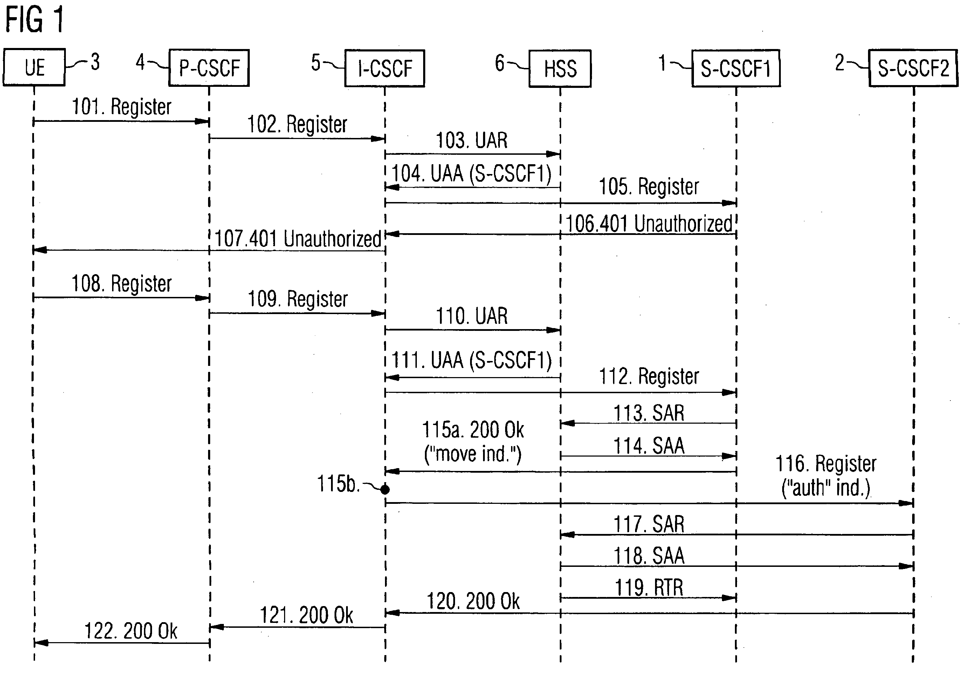

Before being able to establish of a communication session, a user has to register to the IMS network. The basic IMS registration procedure is described in Fig 1 and subclause 5.2.2.3 of 3GPP specification TS 23.228. The S-CSCF selection is conducted by the Interrogating-CSCF (I-CSCF) during initial registration procedure for the registered user or by receiving a terminating request for an unregistered user. The I-CSCF can use server capabilities of the IMS user or any other information like location information, priority, load, etc to decide which S-CSCF is preferred to be selected for the user. However, it may happen that the preferred S-CSCF is not available at the moment of S-CSCF selection, therefore another S-CSCF must be selected. The I-CSCF may also re-select another S-CSCF during re-registration procedure when the previously selected S-CSCF is not available. Any S-CSCF re-selection for the IMS user is not possible as long as the currently selected S-CSCF is still available.

The growth of operator business means also extending the network with new S-CSCF network elements to fulfill the increased number of users and/or more intensive service usages and also to provide service continuity when one of the session control servers (e.g. S-CSCF) is temporarily or permanently out of order, or under maintenance.

An example network with several S-CSCF roles deployed to different network elements. Let it be two S-CSCFs in the IMS network, S-CSCF1 and S-CSCF2. An S-CSCF re-selection procedure allows for IMS network to re-route traffic (registration messages) to S-CSCF1 when S-CSCF2 is not available (e.g. due to maintenance or error). However subscribers registered to S-CSCF1 are then to remain there, even when S-CSCF2 becomes to working state again. Subscribers remain in S-CSCF1 until they de-register from network (which may be quite a long time, since many users do not switch off their phone even at night, and remain registered for days). This means that after recovery of S-CSCF2 basically no traffic is be directed to S-CSCF2 (except new initial registrations, e.g. when a subscriber switches on his/her phone). In other words, the problem is that if due to failure of the preferred S-CSCF a backup S-CSCF is selected for an IMS user, the IMS user cannot be re-assigned back to the preferred S-CSCF after the preferred S-CSCF is recovered.

Similar problem occurs when a new S-CSCF is deployed to the network. To use network resources effectively, traffic load shall be directed to the new S-CSCF in reasonable timeframe.

The object of the invention is to overcome the above problems.

### Summary of the invention

The present invention overcomes the above problem by providing a method, control entity and a serving entity for assigning another serving entity for a user comprising,
receiving (at I-CSCF or S-CSCF) a signaling message associated with a user, the message comprising information indicating that the user may be allocated to another serving entity, and determining, in response to receiving the information indicating that the user may be allocated to another serving entity, if at least one condition for allocation of another serving entity for the user is met.

The signaling message may be a register request or a response to a register request, and may be a message of session initiation protocol. The information indicating that the user may be allocated to another serving entity may comprise an indication that a more favorable serving entity is available for serving the user. The determining may comprise checking if the user has active sessions and/or subscriptions. The determining may comprise checking if a more favorable serving entity or a primary serving entity is available for the user. The user may be a registered user to a communication system.

The present invention has the advantage that it provides a solution for restoring proper load balancing in IMS network including multiple S-CSCF in the situation when there is an S-CSCF that has recovered or new S-CSCF has been deployed to the network.

### Description of drawings

Figure 1 presents an embodiment of the invention in which an S-CSCF indicates to an I-CSCF that a user may be moved to another S-CSCF.
Figure 2 presents an embodiment of the invention in which an I-CSCF re-selects a new S-CSCF and transmit a request to that S-CSCF.
Figure 3 presents an aspect of the invention in which an I-CSCF determines that a new S-CSCF would be available but transmits a request to an old S-CSCF for checking possible active services of the user.
Figure 4 illustrates as aspect of the invention in which an I-CSCF includes in a request sent to an S-CSCF information identifying a preferred S-CSCF for the user, and storing the information in a HSS.
Figure 5 illustrates as aspect of the invention in which an I-CSCF retrieves an S-CSCF address from a HSS and resolves the identity of a preferred S-CSCF.
Figure 6 illustrates the internal structure and/or functions of the network entities, I-CSCF, S-CSCF and HSS, that may be involved in implementing the aspects of the invention.

### Detailed description of the invention

In this section the S-CSCF assignment process for a user is described in more detail. When a User Equipment (UE) attaches and makes itself available for access to IMS services by explicitly registering in the IMS, an S-CSCF shall be assigned to serve the UE. The selection of an S-CSCF is performed in the I-CSCF. For example, the following information is needed in the selection of the S-CSCF:
- Required capabilities for user services, provided by the HSS.
- Operator preference on a per-user basis, provided by the HSS.
- Capabilities of individual S-CSCFs in the home network. This is internal information within the operator's network and may be used in the S-CSCF selection.
- Topological information of where the S-CSCF is located. This is internal information within the operator's network and may be used in the S-CSCF selection.

In order to support the S-CSCF selection described above and to allow the S-CSCF to perform its tasks, the Cx interface must support transferring following information:
- transfer of CSCF-UE security parameters from HSS to CSCF. The security parameters allow the CSCF and the UE to communicate in a trusted and secure way.
- transfer of service parameters of the subscriber from HSS to CSCF. This may include e.g. service parameters, Application Server (AS) address, triggers, information on subscribed media etc. The information on subscribed media is provided in the form of a profile identifier; details of the allowed media parameters associated with the profile identifier are configured in the S-CSCF.

- transfer of CSCF capability information from HSS to CSCF. This may include e.g. supported service set, protocol version numbers etc.
- transfer of session signalling transport parameters from CSCF to HSS. The HSS stores the signalling transport parameters and they are used for routing mobile terminated sessions to the Serving-CSCF. The parameters may include e.g. IP-address and port number of CSCF, transport protocol etc. The information mentioned above shall be transferred before the CSCF is able to serve the user. It shall also be possible to update this information while the CSCF is serving the user, for example if new services are activated for the user.

The basic IMS registration procedure and signaling flow has been presented the upper part of Fig 1. To initiate a registration, UE 3 sends a register signal, e.g. SIP REGISTER message to a P-CSCF 4 in step 101. The register signal includes an identity of a user operating the UE 3 and a domain name of a home network of the user. Upon receipt of the register signal the P-CSCF 4 examines the home domain name to identify the entry point into the home network for forwarding the register signal, in step 102. The entry point into the home network is an I-CSCF 5. The I-CSCF 5 contacts a HSS 6, e.g. by sends a User Authentication Request (UAR) Diameter signal in step 103. The UAR signal includes the user identity and the home domain name. The HSS 6 sends User Authorization Answer (UAA) Diameter signal to the I-CSCF 5 in step 104. The UAA signal includes either the name of the serving call state control function (S-CSCF that is already assigned for the user) or IMS server capabilities which a possible S-CSCF shall support (by mandatory or optional means) in order to be able to serve the given user. In the example message flow, in step 104, the signal includes the name of S-CSCF1. Based on the information received from the HSS 6, the I-CSCF 5 selects a suitable S-CSCF 1 (if an S-CSCF is already assigned then the I-CSCF 5 selects that S-CSCF) and forwards the register signal to it in step 105. Depending on the applied authentication scheme, the S-CSCF 1 may generate a challenge and send it toward the UE 3 in a 401 Authentication Required SIP response (steps 106-107). The S-CSCF 1 may send information to the HSS 6 in order to enable the HSS 6 to store selected S-CSCF related information, such as S-CSCF 1 address, however, this is not shown on Fig 1. The UE 3 generates an answer to the authentication challenge and includes the answer into a new register signal that traverses via the P-CSCF 4 to the I-CSCF 5 (steps 108-109). The I-CSCF 5 queries the HSS 6 (steps 110-111) and forwards the register signal to the S-CSCF 1 in step 112. The S-CSCF 1 authenticates the user based on the received answer for the previously sent challenge and sends Server Assignment Request (SAR) Diameter signal to the HSS 6 (message 113), requesting to assign the given S-CSCF (here S-CSCF 1) for the user. The HSS 6 stores the S-CSCF 1 name as the assigned S-CSCF and sends Server Assignment Answer (SAA) Diameter signal to the S-CSCF 1 (message 114).

After successful registration to the IMS network, periodic application level re-registration is initiated by the UE either to refresh an existing registration or in response to a change in the registration status of the UE. A re-registration procedure may also be initiated when the capabilities of the UE have changed. Re-registration follows the same process as defined above for initial registration, e.g. SIP REGISTER request is used etc. When initiated by the UE, based on the registration time established during the previous registration, the UE shall keep a timer shorter than the registration related timer in the network. If the UE does not re-register, any active sessions may be deactivated.

According to the invention, a user may be moved to another S-CSCF if following conditions are met:
1.) User has initiated initial or re-registration procedure
2.) User has successfully authenticated itself during the registration procedure.
3) User does not have ongoing SIP dialogs (session/subscription) excluding possible subscriptions made for reg-event state (which may be active for the whole duration of subscriber's registration).

Regarding 2^{nd} condition above, from security point of view the purpose is to prevent re-assignment of S-CSCF due to a non-authenticated REGISTER request, otherwise it may be possible that a malicious user initiates registration on behalf of a registered user and the result may be that a new S-CSCF is assigned to the registered user.

Regarding 3^{rd} condition above, moving a registration of a user from a first S-CSCF to a second S-CSCF would terminate any existing dialog that is being served in the first S-CSCF. In order to keep service continuity, users shall preferably not be moved to any new S-CSCF if there is such ongoing session/subscription involving the user.

Conditions when a user needs to be re-assigned to another S-CSCF may be various depending also on load sharing method introduced to an IMS network. Here two example options are presented. For example, load balancing may be realized in a way that a so-called primary S-CSCF is associated for each user. Meaning of the primary S-CSCF is that in a long term a user shall be registered to its primary S-CSCF, if that is available, otherwise to other S-CSCF. If primary S-CSCF logic is used in the network, the S-CSCF re-assignment procedure may be triggered by an S-CSCF during registration procedure of a user if the S-CSCF detects that it is not the primary S-CSCF for the user. Alternatively, load balancing may be realized by introducing a particular working state or operational state to be set to an S-CSCF. Meaning of this working state is that moving subscribers between S-CSCFs may be needed to restore normal or better load balancing in the network. This working state may be set either manually by operator (e.g. after a new S-CSCF is deployed to the network or an S-CSCF was down but recovered) or is may be set by a monitoring system that has load information about S-CSCFs and detects that load sharing among S-CSCFs is not as it is expected in the long term (or monitoring system detects that an S-CSCF has recovered).

The S-CSCF re-assignment procedure itself may check if a user has ongoing activity (e.g. SIP session or subscription, other than reg-event subscription) that prevents moving of subscriber and therefore re-assignment is not actually realized.

In the following, a first embodiment of the invention is described. In the embodiment an S-CSCF re-assignment procedure enables the network to move a registered user from a first S-CSCF to a second S-CSCF and therefore to restore load sharing between S-CSCFs after e.g. a failed S-CSCF has recovered or a S-CSCF was under maintenance and has been set back to working state.

Procedure according to the first embodiment of the invention is in the following described with an example and with help of Figure 1. In the example there are two S-CSCFs deployed in the network, S-CSCF 1 and S-CSCF 2. The S-CSCF 2 has been down and therefore S-CSCF 1 took over all the traffic, i.e. users are registered in S-CSCF 1 (not shown in Fig 1). Next the S-CSCF 2 recovers and the S-CSCF re-assignment procedure is used to "move" some of the users back to S-CSCF 2.

According to this embodiment, a user initiates a registration and is successfully authenticated by the network (Figure 1: messages 101-112. as explained before). The registration may be either initial registration or re-registration

After step 114, the S-CSCF 1 checks whether conditions for triggering the S-CSCF re-assignment procedure are met. The conditions may be one, all, or mixture of conditions described above, or some totally other conditions in combination or without above conditions. For example the S-CSCF1 may check if there is an ongoing session/subscription involving the user, which blocks possible moving of subscriber's registration to another S-CSCF. If there is such ongoing session/subscription, the user shall not be moved and the registration procedure may follow as normally. Otherwise (i.e. no ongoing session/subscription, subscriber may be moved) the S-CSCF 1 indicates in step 115a to the I-CSCF 5 in a SIP "200 OK" response that the user may be moved. The indication may not be an order to assign a new S-CSCF to the user, but it may be an indication to the I-CSCF 5 indicating that if an alternative or a more favorable S-CSCF is available, the user may now be moved without interrupting the services (no active sessions)

After receiving the 200 OK, in step 115b the I-CSCF 5 checks if any other suitable S-CSCF is known to be available. For example, as described before, a primary S-CSCF (here S-CSCF 2) may be associated with the user and the I-CSCF 5 checks if the given primary S-CSCF is known to be available. The availability of the primary S-CSCF may be determined e.g. based on recent successful communication towards the primary S-CSCF, or by any other known means. If there is no other suitable S-CSCF available, then the I-CSCF 5 forwards the "200 OK" response towards the user and thereby the user remains registered in the current S-CSCF, here the S-CSCF 1. The I-CSCF 5 may need to know so-called required and optional capabilities of the user for selecting another suitable S-CSCF. For that purpose the I-CSCF 5 may have to query server capabilities of the user from the HSS 6 with a UAR query (not shown in Figure 1). However, this may not be needed in every circumstance, e.g. when a primary S-CSCF of the user is known by the I-CSCF. In one aspect of the invention the I-CSCF 5 may remove from the "200 Ok" response the "subscriber may be moved" indication inserted by the S-CSCF 1 before forwarding the "200 OK" response to the user of the UE 1, in step 121.

If another suitable S-CSCF is available (here S-CSCF 2), the I-CSCF 5 takes the original REGISTER request, received in step 109, and transmits the request to the S-CSCF 2 in step 116. In one aspect of the invention the I-CSCF 5 may add information into the REGISTER message indicating that user authentication is not needed or that the user is already authenticated, as the authentication has already been done by the S-CSCF1 as explained before in steps 101-114. The use of such indication about authentication may require a trusted relationship between the I-CSCF 5 and the S-CSCF 2. However, this assumption is valid when both the I-CSCF 5 and the S-CSCF 2 are located is in same network (i.e. belong to the logical network of a same/single service provider or operator).

In step 117, the S-CSCF 2 registers the user and informs the HSS 6 with a SAR command and receives a SAA response from the HSS 6 in step 118. The HSS 6 may cancel the registration of the user in the earlier S-CSCF 1 by sending a Registration-Termination-Request (RTR) message, in step 119. RTR is a Diameter command message that a Diameter multimedia server sends to a Diameter multimedia client to request the deregistration of a user. Finally the S-CSCF 2 sends "200 OK" response, in step 120, to the I-CSCF 5 which in turn forwards the "200 Ok" response towards the user in step 121.

In one aspect of the invention, if for some reason the S-CSCF 2 does not answer for the registration request, and this is detected by the I-CSCF 5 early enough, e.g. prior the expiration of REGISTER transaction, then the I-CSCF 5 may still forward the original "200 OK" response generated by the S-CSCF1 towards the user and user remains registered in the S-CSCF1.

Implementation of the first embodiment from an S-CSCF point of view may comprise following changes. When an S-CSCF successfully authenticates a registration attempt (initial registration or re-registration) of a user, it shall check condition(s) for triggering the S-CSCF re-assignment. The condition(s) may depend, for example, on load sharing strategy used in a network, as explained before. If the condition(s) are met, the S-CSCF shall check if there is ongoing session and/or subscriptions (except possible subscription for reg-event package) in which the user is involved. If there is such ongoing SIP dialog then the S-CSCF re-assignment shall not be started and registration procedure shall continue normally. If there is no such ongoing activity that prevents re-assignment, registration procedure may continue as normally, but additionally the S-CSCF shall insert additional information or indication to the "200 Ok" response sent to the I-CSCF that indicates that the user may be moved to another S-CSCF. The information may be added to a SIP message e.g. as a new SIP header or as a new tag to an existing SIP header, for example as a new tag to the Service Route header as that header is added (and later on used) by the S-CSCF.

Further, when an S-CSCF receives a registration attempt from an I-CSCF with an indication that the user has been already authenticated or that authentication is not needed, the S-CSCF may skip authentication of the user. However the S-CSCF may have to make sure that the REGISTER request has been received from a trusted source (i.e..from trusted I-CSCF).

Implementation of the first embodiment may require following changes to I-CSCF behavior. When an I-CSCF receives a "200 OK" response to a REGISTER request it shall check if the response contains indication from the S-CSCF that the user may be moved to another S-CSCF. If the indication is found, the I-CSCF may remove this indication from the SIP response and shall check if there is another S-CSCF that is able to serve the user (i.e. it has the required capabilities). Depending on load sharing strategy used in the network, other conditions may be taken into account at this step as explained before. For example the I-CSCF may check the primary S-CSCF associated with the user. For this check the I-CSCF may need to download server capabilities of the user from the HSS with an UAR request. If such an S-CSCF is found, the I-CSCF forwards the REGISTER request to the new S-CSCF and may indicate to the S-CSCF that the user has been authenticated or that authentication is not needed. There are several possible ways to include the indication to the SIP request. For example, it may be added as a new SIP header or may be a new tag in an existing SIP header. One possible implementation is to add a new tag to the address of S-CSCF (topmost Route header) as this address is added to the SIP message by the I-CSCF (thereby a malicious user cannot put this information to the original REGISTER request). If the I-CSCF cannot select any other S-CSCF (or the selected one is not reachable), the I-CSCF shall forward towards the user the "200 Ok" response received from the first S-CSCF, therefore registration procedure will be successful in the first S-CSCF and the user is not moved to another S-CSCF.

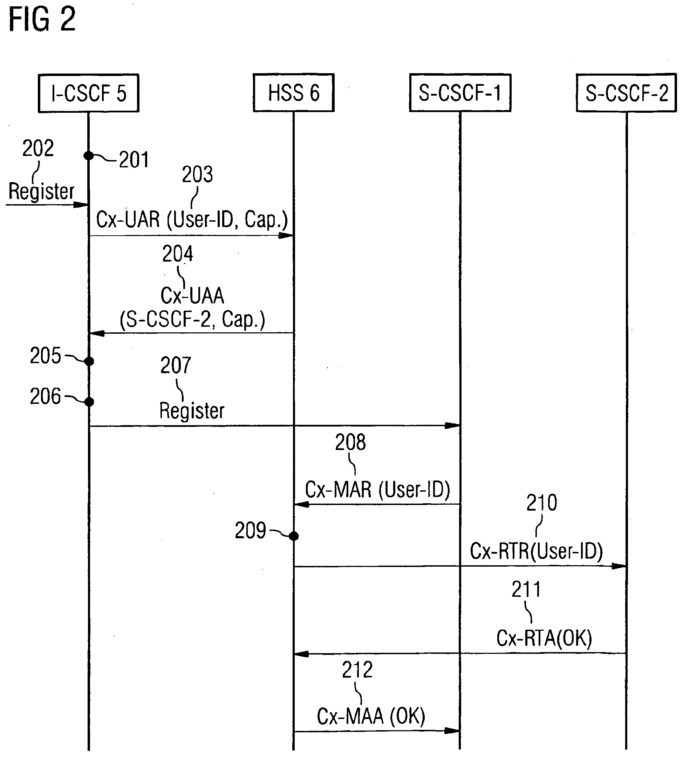

In the following a second embodiment of the invention is described using Figure 2. In step 201, an I-CSCF 5 is keeping information about availability of S-CSCFs configured at the I-CSCF 5, e.g. by monitoring the results of communication between the I-CSCF 5 and the S-CSCFs. Successful communication with an S-CSCF means that the S-CSCF is available. In Fig 2, an S-CSCF 1 and an S-CSCF 2 are configured at the I-CSCF 5. In step 202, a REGISTER request associated with a user is received by the I-CSCF 5. Let us assume that the S-CSCF 2 is currently assigned to serve the user. The I-CSCF 5 may query IMS server capabilities of the user from the HSS 6, using the existing Cx-UAR request as shown in steps 203 and 204. In step 205, the I-CSCF 5 determines, for example by calculating its S-CSCF selection algorithm, whether there is an available S-CSCF which is more favorable for the user than the currently selected S-CSCF 2. An input for the determination may be the IMS server capabilities of the user. In step 206, a more favorable S-CSCF, here the S-CSCF 1 is found as a result of the determination, and the I-CSCF 5 forwards in step 207 the REGISTER request to the preferred S-CSCF 1, which in step 208 sends a Cx-MAR Diameter request to the HSS 6 for registering itself as the assigned S-CSCF for the user. The HSS 6, in step 209, replaces the S-CSCF assignment at the HSS 6 for the user, i.e. the S-CSCF 1 becomes now assigned for the user instead of the S-CSCF 2. In steps 210 and 211 the HSS 6 cancels the registration of the user in the S-CSCF 2 with RTR message, and finally in step 212 acknowledges the Cx-MAR command received in step 208.

The advantage of this embodiment is that only the I-CSCF behavior is affected. The HSS and S-CSCF functions are not affected.

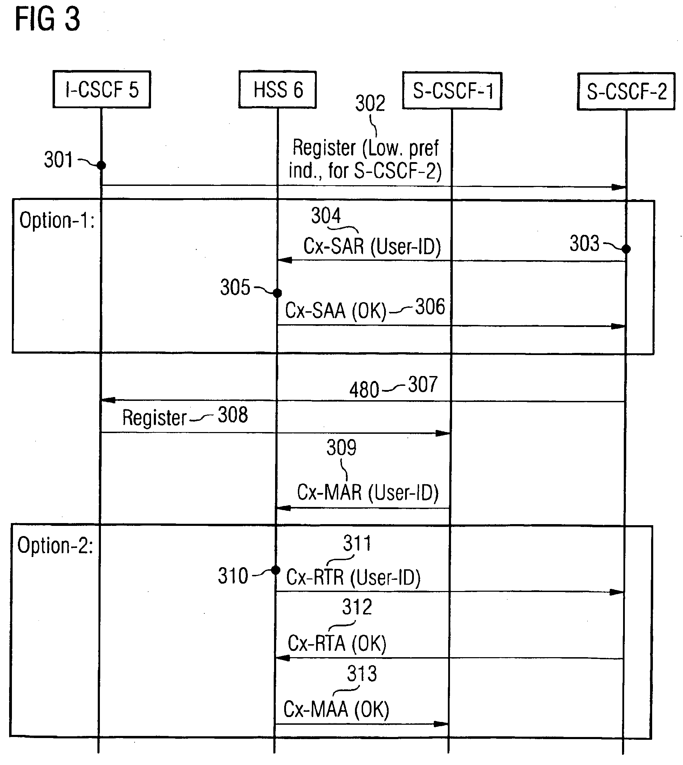

In one aspect of the second embodiment the I-CSCF 5 shall not immediately forward the REGISTER request to the preferred S-CSCF 1, like in step 207 in Fig 2. Instead, and as shown in Fig 3, after determining the more favorable S-CSCF in step 301, the I-CSCF 5 shall forward the REGISTER request to the currently selected S-CSCF 2 in step 302, with an indication that a more favorable S-CSCF is available for the user. The new indication may be embedded in the REGISTER request, e.g. in a SIP header. In step 303, the currently selected S-CSCF 2 detects the indications and shall check whether there are active services for the user at this moment. If this is not the case, the S-CSCF 2 shall reject, in step 307, the REGISTER request with a response code which will trigger the S-CSCF re-selection procedure at the I-CSCF 5. Such a response may be, for example, a SIP "480" response code. After receiving such a response the I-CSCF 5 re-selects the more favorable S-CSCF, here S-CSCF 1, for the user and processes as explained in connection with Fig 2.

There are two options to de-register the user at the currently selected S-CSCF 2. In the first option (option-1 in Fig 3), before the currently selected S-CSCF 2 rejects the REGISTER request in step 307, it may actively start the network initiated user deregistration procedure for the user in step 304. This has the advantage that the last SIP NOTIFY request for the reg event package is sent to UE, P-CSCF and AS (not shown in the figure), which may then re-subscribe the reg event package by the newly re-selected S-CSCF. In step 305, the HSS 6 de-registers the user and removes the S-CSCF 2 assignment for the user 3. The second option (option-2 in Fig 3) is that the previously selected S-CSCF 2 will be replaced with the newly selected S-CSCF 1 by the HSS 6, in step 310, after receiving a Cx-MAR command from the S-CSCF 1 in step 309. In steps 311 and 312 registration is cancelled in the S-CSCF 2.

In one aspect of the invention, in step 303, if the currently selected S-CSCF 2 still has active services for the user, but realizes that it is not the most favorable S-CSCF for the user, it may accept the REGISTER request, possibly with a shortened expiration value for the registration to enable re-selection of new S-CSCF sooner.

The advantage of this aspect is that the preferred S-CSCF 1 will only be re-selected when no active services exist in the currently selected S-CSCF 2.

To avoid the extra Cx-UAR/UAA transaction for server capabilities in the above embodiment, the possible solution is to extend the Cx interface to allow downloading the assigned S-CSCF address and the server capabilities at the same time from the HSS via Cx-UAR/UAA messages. In this case the steps 203 and 204 of the invention may be combined with the first Cx-UAR/UAA query. The advantage of this enhancement is that no additional Cx-UAR/UAA transaction is needed for server capabilities.

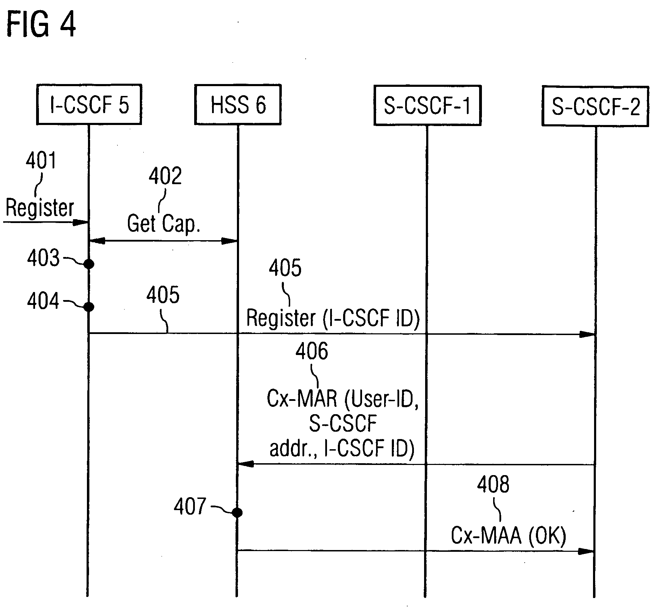

In further aspect of the invention, explained using Figure 4, the S-CSCF selection procedure is enhanced so that, after receiving a REGISTER request 401 and possible downloading server capabilities from the HSS 6 in step 402, the I-CSCF 5 shall embed the result of the S-CSCF determination 403 into a REGISTER request 405 sent to the S-CSCF 2. The I-CSCF 5 determines, in step 404, that the S-CSCF 1 would be more favorable for the user, however the S-CSCF 1 is currently not available, therefore the S-CSCF 2 is selected instead. The S-CSCF 2 may then, in step 406, embed the result of the S-CSCF determination as part of S-CSCF 2 address sent to the HSS 6 in Cx-MAR command, and stored in the HSS 6 in step 407. The result of the S-CSCF determination may be embedded in signaling to the HSS 6 also other ways, e.g. in a new parameter. However, when the calculation result is embedded in the S-CSCF address it is transparent to the HSS 6, i.e. the HSS function does not need to be modified. In step 408, the HSS 6 acknowledges the Cx-MAR message to the S-CSCF 2.

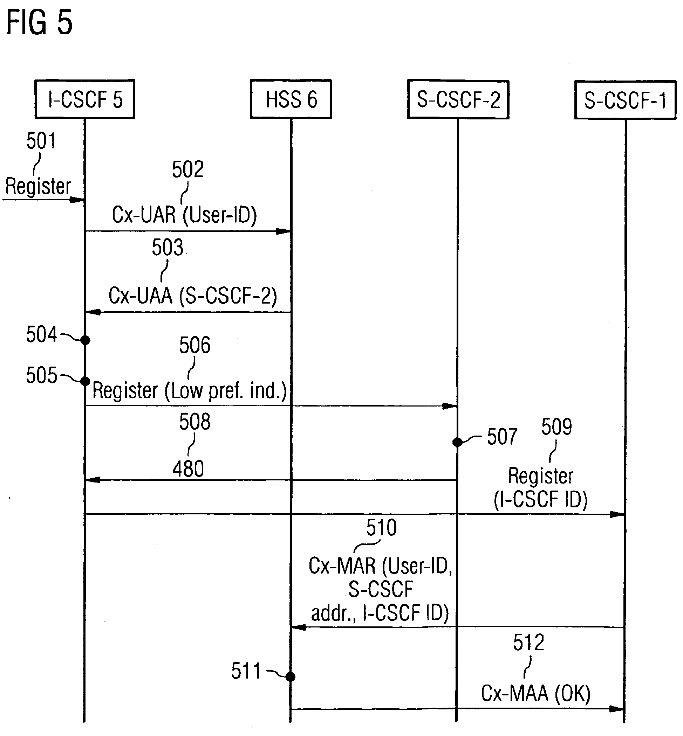

In figure 5, a new REGISTER for the same user is received in step 501, after which the I-CSCF 5 obtains the S-CSCF 2 address from the HSS 6 via Cx-UAR/UAA message exchange, in steps 502 and 503. The I-CSCF 5 may resolve the determination result embedded in the S-CSCF 2 address and check, in step 504, if the more favorable S-CSCF based on the determination result (here S-CSCF 1) is now available. In general, the I-CSCF 5 may determine if the S-CSCF based on the determination result is more favorable for the IMS user than the currently selected S-CSCF for the user. In Fig 5 example, it is determined in step 505 that the more favorable S-CSCF 1 is available. Steps 506-508 corresponds to steps 302, 303 and 307 of Fig 3. This aspect may avoid downloading server capabilities from the HSS 6 and determining the S-CSCF again, e.g. calculating the S-CSCF selection algorithm again.

As an I-CSCF is a session stateless SIP proxy, a REGISTER request may be sent by UE 3 to any I-CSCF in the IMS network. Therefore, the S-CSCF selection algorithm may be I-CSCF independent. However, if the algorithm is I-CSCF specific, according to one aspect of the invention, the I-CSCF identifier may be embedded in the determination result, so that the I-CSCF may decide later whether new calculation shall be conducted, where server capabilities are needed. The I-CSCF identifier may be present for example in messages 405 and 406 of Fig 4 and in message 503 of Fig 5 and may also be stored in the HSS 6, for example also as part of the S-CSCF address. For simplicity, the possible user de-registration procedure at the currently selected S-CSCF is not shown in Figure 5 as it is already shown in Figure 2. Furthermore, the optional download of server capabilities in case of I-CSCF specific selection algorithm is not shown in Figure 5.

Embedding the calculation result and I-CSCF identifier in REGISTER request or in the S-CSCF address may be done in various ways. It may be, e.g. in a SIP header or a URI parameter.

The advantage of this approach is that in many use cases the download of server capabilities and redetermining the S-CSCF or re-calculation of S-CSCF selection algorithm may be avoided. Thus, the possible performance impact may be avoided. Furthermore the Cx interface is not affected if the calculation result is part of S-CSCF address and is thereby transparent for the HSS. The S-CSCF is affected, as it shall copy the result contained in the REGISTER request into its address sent to the HSS.

In this aspect of the invention, the I-CSCF does not have to calculate the S-CSCF selection algorithm for every REGISTER request, which has a positive performance impact.

In one embodiment of the invention, a new administrative state for S-CSCF is introduced. The S-CSCF in this new administrative state shall check conditions for moving users. Similarly to other embodiments above the conditions may depend on load sharing strategy applied in the network. In this embodiment, an S-CSCF de-registers a user using so-called network initiated de-registration procedure thereby forcing the user to register again to the IMS networks. Then S-CSCF selection procedure ensures that the user, during the new registration, is registered to an S-CSCF according to the load balancing strategy applied for the network. The effect of the network initiated de-registration procedure is that the S-CSCF allocated to the user is removed from the HSS database, and hence the HSS does no longer indicate that the user would be registered to any specific S-CSCF, and thereby a new S-CSCF may be selected freely by the I-CSCF. The trigger for initiating a network initiated registration for a certain user could be for example the determination by the S-CSCF that a half of registration time would expire soon for the user. De-registration may then be done a couple of minutes before this.

This new administrative state may be set by an administrator of the network or by a monitoring system when that is appropriate (e.g. when failed S-CSCF recovers or when new S-CSCF is deployed).

Advantage of this embodiment is that no changes are needed to I-CSCF logic.

Invention provides a solution for restoring proper load balancing in IMS network including multiple S-CSCF in the situation when there is an S-CSCF that has recovered or new S-CSCF has been deployed to the network. As the described scenario is expected to occur in live network, it is important to have a solution for it. Without this invention networks where service continuity is provided by multiple S-CSCF roles with load sharing will face problem whenever an S-CSCF recovers or new S-CSCF is added, as currently there is no way to move back subscribers to the recovered/new S-CSCF.

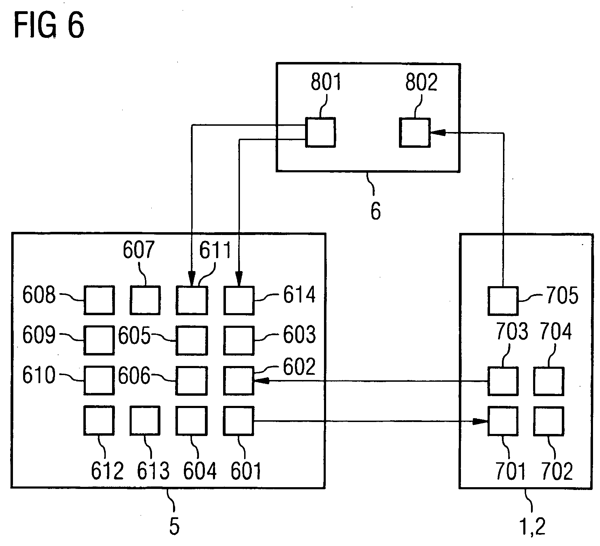

Figure 6 illustrates the internal structure and/or functions of the network entities that may be involved in implementing the aspects of the invention. An I-CSCF 5 may include a transmitting unit 601 that is configured to transmit a request (e.g. SIP REGISTER) associated with a user to a first S-CSCF currently allocated to provide services to the user. A receiving unit 602 may be configured to receive a response to the request from the first S-CSCF. A determination unit 603 may be configured to determine if the response includes information indicating that the user may be allocated to another S-CSCF. An allocating unit 604 may be configured to determine if a further S-CSCF is to be allocated to the user. The transmitting unit 601 may be configured to transmit the register request to the further S-CSCF if such is to be allocated to the user based on the determination by the allocating unit 604. An indication unit 605 may be configured to include, in the register request to the further S-CSCF, information indicating that authentication of the user is not needed or information indicating that the user is already authenticated. The indication may be a parameter or a header of SIP. A second transmitting unit 606 may be configured to transmit the received response to the user, and a removing unit 607 may be configured to remove, from the response, the information indicating that the user may be allocated to another S-CSCF before transmitting the response to the user.

In one aspect of the invention the I-CSCF 5 may include a maintaining unit 608 configured to maintain information about availability of plurality of S-CSCFs assignable for users of the IMS system. An assignment unit 609 may be configured to store information about an S-CSCF currently assigned for a user. A rules unit 611 may be configured to store selection rules for selecting an S-CSCF for the user. A receiving unit 612 may be configured to receive a request associated with the user, and a determination unit 613 may be configured to determine, based on the selection rules, if a further one of the plurality of S-CSCFs is to be assigned for the user and whether that further S-CSCF is available.

The transmitting unit 601 may be configured to transmit the received request to the assigned S-CSCF and including in the request information indicating that an alternative S-CSCF may be assigned for the user, if the result of the determination made by the determination unit 613 is that the further serving entity is to be assigned for the user. The assignment unit 609 may be configured to assign the further S-CSCF for the user, if the result of the determination made by the determination unit 613 is that the further S-CSCF is to be assigned for the user. The transmitting unit 601 may be configured to transmit the received request to the further S-CSCF. The indicating unit 605 may be configured to include in the transmitted request, information indicating an identity of a preferred S-CSCF for the user based on the selection rules. The rules unit 611 may be configured to receive at least part of the selection rules from an HSS, for example according to Diameter protocol. The second receiving unit 614 may be configured to receive from the HSS information indicating the identity of the preferred S-CSCF for the user, for example according to Diameter protocol.

An S-CSCF 1,2 in Fig 6 may include a receiving unit 701 configured to receive a register request (e.g. SIP REGISTER) associated with a user. A determining unit 702 may be configured to determine if at least one condition for initiating a re-allocation of an S-CSCF for the user is met. A transmitting unit 703 may be configured to transmit a response to the received register request, and an indicating unit 704 may be configured to include, in the response, information indication that the user may be allocated to another S-CSCF, in case the result of the determination made by the determining unit 702 is that a re-allocation of an S-CSCF is to be initiated. The determination unit 702 may determine if the S-CSCF is a primary S-CSCF for the user or determine whether load balancing in the communication system is optimal. The determination whether the load balancing in the communication system is optimal may comprise determining an operational state of the S-CSCF. The determination unit 702 may determine if the user has active session and/or active subscription. Based on these example determinations or other conditions the determination unit 702 may conclude that the conditions for initiating a re-allocation of an S-CSCF for the user is met

The receiving unit 701 may be configured to receive information indicating that the alternative S-CSCF may be assigned for the user. The determining unit 702 may be configured to determine if the user has active session and/or an active subscription, and transmitting unit 703 may be configured to reject the request if the user has no active session and/or active subscription. The transmitting unit 703 may reject the request with a response that initiates a S-CSCF re-selection procedure in the I-CSCF, e.g. with SIP 480 response.

In one aspect of the invention the receiving unit 701 may be configured to receive (e.g. in SIP REQUEST) information indicating the identity of the preferred S-CSCF for the user. The transmitting unit 705 may be configured to transmit to an HSS information indicating the identity of the preferred S-CSCF, for example according to Diameter protocol. The transmitting unit 705 may be configured to embed the information indicating the identity of the preferred S-CSCF in the identity or address of the S-CSCF (in the address of the S-CSCF contacting the HSS) .

An HSS 6 may include a sending unit 801 configured to send IMS server capabilities associated with an IMS user to an I-CSCF. The sending unit 801 may also send to the I-CSCF information indicating the identity of the preferred S-CSCF of the user. A receiving unit 802 may receive from an S-CSCF information indicating the identity of the preferred S-CSCF of the user. The sending unit 801 and the receiving unit 802 may transmit and receive using Diameter protocol.

The units described above may be implemented e.g using microprocessors and/or other electrical components and/or by software.

The invention is not limited to IMS networks, but may also be applied in other networks having similar subscription/register entity role as HSS, control node role as I-CSCF and serving entity role than S-CSCF and where serving entities are capable of providing services to user of the network. Therefore, the S-CSCF is only used here as an example of a serving entity, the I-CSCF as an example of the control entity and the HSS as an example of a subscription/register entity. Functions of the subscription/register entity (HSS), the control entity (I-CSCF) and the user equipment (UE) described above may be implemented by code means, as software, and loaded into memory of a computer.

## Claims

1. A control entity (5) in a communication system, comprising:
means for transmitting (601) a request associated with a user (3) to a first serving entity (1) allocated to provide services to the user (3);
means for receiving (602) a response to the request from the first serving entity;
means for determining (603) if the response includes information indicating that the user may be allocated to another serving entity;
means for determining (604), in response to receiving the information indicating that the user may be allocated to another serving entity, if a further serving entity (2) is to be allocated to the user, comprising checking if the further serving entity (2) is known to be available; and
wherein the means for transmitting (601) is configured to transmit the request to the further serving entity (2), if the further serving entity is to be allocated to the user.

2. The control entity (5) according to claim 1, further comprising
means for including (605), in the request to the further serving entity (2), information indicating that authentication of the user is not needed or information indicating that the user is already authenticated.

3. The control entity (5) according to claim 1 or 2, further comprising
means for transmitting (606) the received response to the user (3), and,
means for removing (607), from the response, the information indicating that the user may be allocated to another serving entity, before transmitting the response to the user (3).

4. A serving entity (1,2) in a communication system, comprising:
means for receiving (701) from an interrogating call state control function (5) a request associated with a user (3),
means for determining (702) if at least one condition for initiating a re-allocation of a serving entity for the user (3) is met,
means for transmitting (703) a response to the received request, and
means for including (704), in the response, information indication that the user may be allocated to another serving entity, in case the result of the determination is that a re-allocation of a serving entity is to be initiated.

5. A serving entity (1,2) of claim 4, wherein the determination if the at least one condition is met comprises determining if the serving entity is a primary serving entity for the user (3), and if not, the result of the determination is that that condition is met.

6. A serving entity (1,2) of claim 4 or 5, wherein the determination if the at least one condition is met comprises determining whether load balancing in the communication system is optimal, and if not, the result of the determination is that that condition is met.

7. A serving entity (1,2) of claim 6, wherein the determination whether the load balancing in the communication system is optimal comprises determining an operational state of the serving entity.

8. A serving entity (1,2) of any of claims 4 - 7, wherein the determination if the at least one condition is met comprises determining if the user (3) has at least one of active session and active subscription, and if not, the result of the determination is that that condition is met.

9. The control entity (5) according to any of claims 1 - 3, wherein the request comprises Register request of Session Initiation Protocol (SIP) comprising an initial registration or a re-registration to the communication system.

10. The control entity (5) according to any of claims 1 - 3, wherein the user comprises a registered user to the communication system.

11. A control entity (5) in a communication system, comprising:
means for maintaining (608) information about availability of plurality of serving entities (1,2) that may be allocated to users (3) of the communication system;
means for storing (609) information about a serving entity (2) allocated to a user (3);
means for storing (611) selection rules for selecting a serving entity for the user (3);
means for receiving (612) a request associated with the user (3) ;
means for determining (613), based on the selection rules, if a further one (1) of the plurality of serving entities, is to be allocated to the user (3) and whether the further serving entity (1) is available, and,
means for transmitting (601) the received request to the allocated serving entity (2) and including in the transmitted request information indicating that an alternative serving entity may be allocated to the user (3), if the result of the determination means (613) is that the further serving (1) entity is to be allocated to the user (3).

12. The control entity (5) of claim 11, further comprising:
means for including (605) in the transmitted request, information indicating an identity of a preferred serving entity (1) for the user (3), based on the selection rules.

13. The control entity (5) of any of claims 11 - 12, wherein the request comprises Register request of Session Initiation Protocol (SIP) comprising an initial registration or a re-registration to the communication system.

14. The control entity (5) of any of claims 11 - 13, wherein the means for storing (611) selection rules is configured to receive at least part of the selection rules from a subscription entity (6).

15. The control entity (5) of any of claims 11 - 14, wherein the selection rules comprise server capabilities of an Internet Protocol Multimedia Subsystem (IMS) and the control entity comprises an interrogating call state control function (I-CSCF) of the Internet Protocol Multimedia Subsystem (IMS).

16. The control entity (5) of any of claims 11 - 15, wherein the user (3) comprises a registered user to the communication system.

17. A communication system comprising the control entity (660) of any of claims 11-16 and a serving entity (1,2), the serving entity (1,2) comprising:
means for receiving (701), in the received request associated with the user (3), the information indicating that an alternative serving entity may be allocated to the user (3),
means for determining (702), in response to receiving the information indicating that an alternative serving entity may be allocated to the user, if the user (3) has at least one of an active session and an active subscription, and,
means for rejecting (703) the request if the user (3) has no active session and/or active subscription.

18. A communication system of claim 17, wherein rejecting the request comprises rejecting the request with a response that initiates a serving entity re-selection procedure in the control entity.

19. A communication system comprising the control entity (5) of claim 12 and a serving entity (1,2), the serving entity (1,2) comprising:
means for receiving (701), in the received request associated with the user (3), information indicating the identity of the preferred serving entity (1) for the user (3),
means for transmitting (705) to a subscription entity (6) information indicating the identity of the preferred serving entity (1) for the user (3).

20. A communication system of claim 19, wherein the means for transmitting (705) of the serving entity (1,2) is configured to embed the information indicating the identity of the preferred serving entity (1) in the identity of the serving entity (1, 2).

21. A communication system of claim 20, wherein the control entity (5) further comprises a means for receiving (614) from the subscription entity (6) information indicating the identity of the preferred serving entity (1) for the user (3).

22. A method of allocating a serving entity for a user, comprising,
receiving, at a first call state control function, from a second call state control function (1,5) a signaling message (115a, 302, 506) associated with a user (3) and comprising information indicating that the user (3) may be allocated to another serving entity, and
determining (115b, 303, 507), in response to receiving the information indicating that the user (3) may be allocated to another serving entity, if at least one condition for allocation of another serving entity for the user (3) is met.

23. The method of claim 22 wherein the signaling message (115a, 302, 506) comprises a register request (392, 506) or a response (115a) to a register request.

24. The method of claim 22 or 23 wherein the information indicating that the user (3) may be allocated to another serving entity comprises an indication that a more favorable serving entity is available for serving the user (3).

25. The method of any of claims 22-24, wherein the determining (303, 506) comprises checking if the user (3) has active sessions and/or subscriptions.

26. The method of claim 22 or 23, wherein the determining (115b) comprises checking if a more favorable serving entity (1, 2) or a primary serving entity (1, 2) is available for the user (3).

27. The method of any of claims 22 or 26, wherein the user (3) comprises a registered user to a communication system.

28. A computer program product comprising code means adapted to produce the steps of any one of claims 22-27 when loaded into the memory of a computer.

## Patentansprüche

1. Steuereinheit (5) in einem Kommunikationssystem, die Folgendes umfasst:
Mittel zum Senden (601) einer Anforderung, die einem Anwender (3) zugeordnet ist, an eine erste dienende Einheit (1), die zugewiesen ist, um dem Anwender (3) mit Diensten zu dienen;
Mittel zum Empfangen (602) einer Antwort auf die Anforderung von der ersten dienenden Einheit;
Mittel zum Bestimmen (603), ob die Antwort Informationen enthält, die anzeigen, dass der Anwender einer anderen dienenden Einheit zugewiesen werden kann;
Mittel zum Bestimmen (604), ob dem Anwender eine weitere dienende Einheit (2) zugewiesen werden soll, als Reaktion auf das Empfangen der Informationen, die anzeigen, dass der Anwender einer anderen dienenden Einheit zugewiesen werden kann, wobei die Mittel zum Bestimmen (604) das Überprüfen umfassen, ob bekannt ist, ob die weitere dienende Einheit (2) verfügbar ist; und
wobei die Mittel zum Senden (601) konfiguriert sind, die Anforderung an die weitere dienende Einheit (2) zu senden, wenn die weitere dienende Einheit dem Anwender zugewiesen werden soll.

2. Steuereinheit (5) nach Anspruch 1, die ferner Folgendes umfasst:
Mittel zum Aufnehmen (605) von Informationen, die anzeigen, dass die Authentifizierung des Anwenders nicht benötigt wird, oder von Informationen, die anzeigen, dass der Anwender bereits authentifiziert ist, in die Anforderung an die weitere dienende Einheit (2).

3. Steuereinheit (5) nach Anspruch 1 oder 2, die ferner Folgendes umfasst:
Mittel zum Senden (606) der empfangenen Antwort an den Anwender (3), und
Mittel zum Löschen (607) der Informationen, die anzeigen, dass der Anwender einer anderen dienenden Einheit zugewiesen werden kann, aus der Antwort, bevor die Antwort an den Anwender (3) gesendet wird.

4. Dienende Einheit (1, 2) in einem Kommunikationssystem, die Folgendes umfasst:
Mittel zum Empfangen (701) einer Anforderung, die einem Anwender (3) zugeordnet ist, von einer abfragenden Rufzustandssteuerfunktion (5),
Mittel zum Bestimmen (702), ob mindestens eine Bedingung für das Initiieren einer Neuzuweisung einer dienenden Einheit für den Anwender (3) erfüllt ist,
Mittel zum Senden (703) einer Antwort auf die empfangene Anforderung, und
Mittel zum Aufnehmen (704) von Informationen, die anzeigen, dass der Anwender einer anderen dienenden Einheit zugewiesen werden kann, in die Antwort, falls das Ergebnis der Bestimmung ist, dass eine Neuzuweisung einer dienenden Einheit initiiert werden soll.

5. Dienende Einheit (1, 2) nach Anspruch 4, wobei die Bestimmung, ob die mindestens eine Bedingung erfüllt ist, das Bestimmen umfasst, ob die dienende Einheit eine primäre dienende Einheit für den Anwender (3) ist, und falls dies nicht zutrifft, das Ergebnis der Bestimmung ist, dass die Bedingung erfüllt ist.

6. Dienende Einheit (1, 2) nach Anspruch 4 oder 5, wobei die Bestimmung, ob die mindestens eine Bedingung erfüllt ist, das Bestimmen umfasst, ob der Lastausgleich in dem Kommunikationssystem optimal ist, und falls dies nicht zutrifft, das Ergebnis der Bestimmung ist, dass die Bedingung erfüllt ist.

7. Dienende Einheit (1, 2) nach Anspruch 6, wobei die Bestimmung, ob der Lastausgleich in dem Kommunikationssystem optimal ist, das Bestimmen eines Betriebszustands der dienenden Einheit umfasst.

8. Dienende Einheit (1, 2) nach einem der Ansprüche 4-7, wobei die Bestimmung, ob die mindestens eine Bedingung erfüllt ist, das Bestimmen umfasst, ob der Anwender (3) eine aktive Sitzung und/oder ein aktives Abonnement aufweist, und falls dies nicht zutrifft, das Ergebnis der Bestimmung ist, dass die Bedingung erfüllt ist.

9. Steuereinheit (5) nach einem der Ansprüche 1-3, wobei die Anforderung eine Registrieranforderung des Protokolls zum Aufbau einer Kommunikationssitzung (SIP) umfasst, das eine anfängliche Registrierung oder eine Neuregistrierung in das Kommunikationssystem umfasst.

10. Steuereinheit (5) nach einem der Ansprüche 1-3, wobei der Anwender einen in dem Kommunikationssystem registrierten Anwender umfasst.

11. Steuereinheit (5) in einem Kommunikationssystem, die Folgendes umfasst:
Mittel zum Behalten (608) von Informationen über die Verfügbarkeit mehrerer dienender Einheiten (1, 2), die Anwendern (3) des Kommunikationssystems zugewiesen werden können;
Mittel zum Speichern (609) von Informationen über eine dienende Einheit (2), die einem Anwender (3) zugewiesen ist;
Mittel zum Speichern (611) von Auswahlregeln zum Auswählen einer dienenden Einheit für den Anwender (3);
Mittel zum Empfangen (612) einer Anforderung, die dem Anwender (3) zugeordnet ist;
Mittel zum Bestimmen (613), basierend auf den Auswahlregeln, ob dem Anwender (3) eine weitere (1) der mehreren dienenden Einheiten zugewiesen werden soll und ob die weitere dienende Einheit (1) verfügbar ist, und
Mittel zum Senden (601) der empfangenen Anforderung an die zugewiesene dienende Einheit (2) und Aufnehmen von Informationen, die anzeigen, dass dem Anwender (3) eine alternative dienende Einheit zugewiesen werden kann, in die gesendete Anforderung, wenn das Ergebnis der Bestimmungsmittel (613) ist, dass die weitere dienende Einheit (1) dem Anwender (3) zugewiesen werden soll.

12. Steuereinheit (5) nach Anspruch 11, die ferner Folgendes umfasst:
Mittel zum Aufnehmen (605) von Informationen in die gesendete Anforderung, die eine Identität einer bevorzugten dienenden Einheit (1) für den Anwender (3) basierend auf den Auswahlregeln anzeigen.

13. Steuereinheit (5) nach einem der Ansprüche 11-12, wobei die Anforderung eine Registrieranforderung des Protokolls zum Aufbau einer Kommunikationssitzung (SIP) umfasst, das eine anfängliche Registrierung oder eine Neuregistrierung in das Kommunikationssystem umfasst.

14. Steuereinheit (5) nach einem der Ansprüche 11-13, wobei die Mittel zum Speichern (611) von Auswahlregeln konfiguriert sind, zumindest einen Teil der Auswahlregeln von einer Abonnementeinheit (6) zu empfangen.

15. Steuereinheit (5) nach einem der Ansprüche 11-14, wobei die Auswahlregeln Serverfunktionalitäten eines Internetprotokoll-Multimedia-Untersystems (IMS) umfassen und die Steuereinheit eine abfragende Rufzustandssteuerfunktion (I-CSCF) des Internetprotokoll-Multimedia-Untersystems (IMS) umfasst.

16. Steuereinheit (5) nach einem der Ansprüche 11-15, wobei der Anwender (3) einen in dem Kommunikationssystem registrierten Anwender umfasst.

17. Kommunikationssystem, das die Steuereinheit (660) nach einem der Ansprüche 11-16 und eine dienende Einheit (1, 2) umfasst, wobei die dienende Einheit Folgendes (1, 2) umfasst:
Mittel zum Empfangen (701) der Informationen in der empfangenen Anforderung, die dem Anwender (3) zugeordnet ist, die anzeigen, dass dem Anwender (3) eine alternative dienende Einheit zugewiesen werden kann,
Mittel zum Bestimmen (702), ob der Anwender (3) eine aktive Sitzung und/oder ein aktives Abonnement aufweist, als Reaktion auf das Empfangen der Informationen, die anzeigen, dass dem Anwender eine alternative dienende Einheit zugewiesen werden kann, und
Mittel zum Zurückweisen (703) der Anforderung, wenn der Anwender (3) keine aktive Sitzung und/oder kein aktives Abonnement aufweist.

18. Kommunikationssystem nach Anspruch 17, wobei das Zurückweisen der Anforderung das Zurückweisen der Anforderung mit einer Antwort umfasst, die ein Neuauswahlverfahren der dienenden Einheit in der Steuereinheit initiiert.

19. Kommunikationssystem, das die Steuereinheit (5) nach Anspruch 12 und eine dienende Einheit (1, 2) umfasst, wobei die dienende Einheit (1, 2) Folgendes umfasst:
Mittel zum Empfangen (701) von Informationen, die die Identität der bevorzugten dienenden Einheit (1) für den Anwender (3) anzeigen, in der empfangenen Anforderung, die dem Anwender (3) zugeordnet ist,
Mittel zum Senden (705) von Informationen, die die Identität der bevorzugten dienenden Einheit (1) für den Anwender (3) anzeigt, an eine Abonnementeinheit (6).

20. Kommunikationssystem nach Anspruch 19, wobei die Mittel zum Senden (705) der dienenden Einheit (1, 2) konfiguriert sind, die Informationen, die die Identität der bevorzugten dienenden Einheit (1) anzeigen, in die Identität der dienenden Einheit (1, 2) einzubetten.

21. Kommunikationssystem nach Anspruch 20, wobei die Steuereinheit (5) ferner Mittel zum Empfangen (614) von Informationen von der Abonnementeinheit (6) umfasst, die die Identität der bevorzugten dienenden Einheit (1) für den Anwender (3) anzeigen.

22. Verfahren zum Zuweisen einer dienenden Einheit zu einem Anwender, das Folgendes umfasst:
Empfangen einer Signalisierungsnachricht (115a, 302, 506), die einem Anwender (3) zugeordnet ist und Informationen umfasst, die anzeigen, dass der Anwender (3) einer anderen dienenden Einheit zugewiesen werden kann, von einer zweiten Rufzustandssteuerfunktion (1, 5) an einer ersten Rufzustandssteuerfunktion, und
Bestimmen (115b, 303, 507) als Reaktion auf das Empfangen der Informationen, die anzeigen, dass der Anwender (3) einer anderen dienenden Einheit zugewiesen werden kann, ob mindestens eine Bedingung zum Zuweisen einer anderen dienenden Einheit für den Anwender (3) erfüllt ist.

23. Verfahren nach Anspruch 22, wobei die Signalisierungsnachricht (115a, 302, 506) eine Registrieranforderung (392, 506) oder eine Antwort (115a) auf eine Registrieranforderung umfasst.

24. Verfahren nach Anspruch 22 oder 23, wobei die Informationen, die anzeigen, dass der Anwender (3) einer anderen dienenden Einheit zugewiesen werden kann, einen Hinweis umfassen, dass eine günstigere dienende Einheit verfügbar ist, um dem Anwender (3) zu dienen.

25. Verfahren nach einem der Ansprüche 22-24, wobei das Bestimmen (303, 506) das Überprüfen, ob der Anwender (3) aktive Sitzungen und/oder Abonnements aufweist, umfasst.

26. Verfahren nach Anspruch 22 oder 23, wobei das Bestimmen (115b) das Überprüfen, ob eine günstigere dienende Einheit (1, 2) oder eine primäre dienende Einheit (1, 2) für den Anwender (3) verfügbar ist, umfasst.

27. Verfahren nach einem der Ansprüche 22 oder 26, wobei der Anwender (3) einen in einem Kommunikationssystem registrierten Anwender umfasst.

28. Computerprogrammprodukt, das Codemittel umfasst, die dafür ausgelegt sind, die Schritte nach einem der Ansprüche 22-27 zu erzeugen, wenn es in den Speicher eines Computer geladen wird.

## Revendications

1. Une entité de commande (5) dans un système de communication, comprenant :
un moyen de transmission (601) d'une demande associée à un utilisateur (3) à une première entité de desserte (1) attribuée de façon à fournir des services à l'utilisateur (3),
un moyen de réception (602) d'une réponse à la demande à partir de la première entité de desserte,
un moyen de détermination (603) si la réponse contient des informations indiquant que l'utilisateur peut être attribué à une autre entité de desserte,
un moyen de détermination (604), en réponse à la réception des informations indiquant que l'utilisateur peut être attribué à une autre entité de desserte, si une autre entité de desserte (2) doit être attribuée à l'utilisateur, comprenant la vérification si l'autre entité de desserte (2) est connue être disponible, et
le moyen de transmission (601) étant configuré de façon à transmettre la demande à l'autre entité de desserte (2) si l'autre entité de desserte doit être attribuée à l'utilisateur.

2. L'entité de commande (5) selon la revendication 1, comprenant en outre
un moyen d'inclusion (605), dans la demande à l'autre entité de desserte (2), d'informations indiquant qu'une authentification de l'utilisateur n'est pas nécessaire ou des informations indiquant que l'utilisateur est déjà authentifié.

3. L'entité de commande (5) selon la revendication 1 ou 2, comprenant en outre
un moyen de transmission (606) de la réponse reçue à l'utilisateur (3), et,
un moyen de suppression (607), de la réponse, des informations indiquant que l'utilisateur peut être attribué à une autre entité de desserte avant la transmission de la réponse à l'utilisateur (3).

4. Une entité de desserte (1, 2) dans un système de communication, comprenant :
un moyen de réception (701) à partir d'une fonction de commande d'état d'appel d'interrogation (5) d'une demande associée à un utilisateur (3),
un moyen de détermination (702) si au moins une condition destinée au lancement d'une réattribution d'une entité de desserte pour l'utilisateur (3) est satisfaite,
un moyen de transmission (703) d'une réponse à la demande reçue, et
un moyen d'inclusion (704), dans la réponse, d'informations indiquant que l'utilisateur peut être attribué à une autre entité de desserte dans le cas où le résultat de la détermination est qu'une réattribution d'une entité de desserte doit être lancée.

5. Une entité de desserte (1, 2) selon la revendication 4, dans laquelle la détermination si la au moins une condition est satisfaite comprend la détermination si l'entité de desserte est une entité de desserte primaire pour l'utilisateur (3), et si non, le résultat de la détermination est que cette condition est satisfaite.

6. Une entité de desserte (1, 2) selon la revendication 4 ou 5, dans laquelle la détermination si la au moins une condition est satisfaite comprend la détermination si un équilibrage de charges dans le système de communication est optimal, et si non, le résultat de la détermination est que cette condition est satisfaite.

7. Une entité de desserte (1, 2) selon la revendication 6, dans laquelle la détermination si l'équilibrage de charges dans le système de communication est optimal comprend la détermination d'un état opérationnel de l'entité de desserte.

8. Une entité de desserte (1, 2) selon l'une quelconque des revendications 4 à 7, dans laquelle la détermination si la au moins une condition est satisfaite comprend la détermination si l'utilisateur (3) possède au moins un élément parmi une session active et un abonnement actif, et si non, le résultat de la détermination est que cette condition est satisfaite.

9. L'entité de commande (5) selon l'une quelconque des revendications 1 à 3, dans laquelle la demande comprend une demande d'enregistrement de protocole d'initiation de session (SIP) comprenant un enregistrement initial ou un réenregistrement auprès du système de communication.

10. L'entité de commande (5) selon l'une quelconque des revendications 1 à 3, dans laquelle l'utilisateur comprend un utilisateur enregistré auprès du système de communication.

11. Une entité de commande (5) dans un système de communication, comprenant :
un moyen d'entretien (608) d'informations relatives à une disponibilité d'une pluralité d'entités de desserte (1, 2) qui peuvent être attribuées à des utilisateurs (3) du système de communication,
un moyen de conservation en mémoire (609) d'informations relatives à une entité de desserte (2) attribuée à un utilisateur (3),
un moyen de conservation en mémoire (611) de règles de sélection destinées à la sélection d'une entité de desserte pour l'utilisateur (3),
un moyen de réception (612) d'une demande associée à l'utilisateur (3),
un moyen de détermination (613), en fonction des règles de sélection, si une autre entité (1) de la pluralité d'entités de desserte doit être attribuée à l'utilisateur (3) et si l'autre entité de desserte (1) est disponible, et,
un moyen de transmission (601) de la demande reçue à l'entité de desserte attribuée (2) et comprenant dans la demande transmise des informations indiquant qu'une entité de desserte de rechange peut être attribuée à l'utilisateur (3) si le résultat du moyen de détermination (613) est que l'autre entité de desserte (1) doit être attribuée à l'utilisateur (3).

12. L'entité de commande (5) selon la revendication 11, comprenant en outre :
un moyen d'inclusion (605) dans la demande transmise, d'informations indiquant une identité d'une entité de desserte préférée (1) pour l'utilisateur (3) en fonction des règles de sélection.

13. L'entité de commande (5) selon l'une quelconque des revendications 11 à 12, dans laquelle la demande comprend une demande d'enregistrement de protocole d'initiation de session (SIP) comprenant un enregistrement initial ou un réenregistrement auprès du système de communication.

14. L'entité de commande (5) selon l'une quelconque des revendications 11 à 13, dans laquelle le moyen de conservation en mémoire (611) de règles de sélection est configuré de façon à recevoir au moins une partie des règles de sélection à partir d'une entité d'abonnement (6).

15. L'entité de commande (5) selon l'une quelconque des revendications 11 à 14, dans laquelle les règles de sélection comprennent des capacités de serveur d'un sous-système multimédia protocole Internet (IMS) et l'entité de commande comprend une fonction de commande d'état d'appel d'interrogation (I-CSCF) du sous-système multimédia protocole Internet (IMS).

16. L'entité de commande (5) selon l'une quelconque des revendications 11 à 15, dans laquelle l'utilisateur (3) comprend un utilisateur enregistré auprès du système de communication.

17. Un système de communication comprenant l'entité de commande (660) selon l'une quelconque des revendications 11 à 16 et une entité de desserte (1, 2), l'entité de desserte (1, 2) comprenant :
un moyen de réception (701), dans la demande reçue associée à l'utilisateur (3), des informations indiquant qu'une entité de desserte de rechange peut être attribuée à l'utilisateur (3),
un moyen de détermination (702), en réponse à la réception des informations indiquant qu'une entité de desserte de rechange peut être attribuée à l'utilisateur, si l'utilisateur (3) possède au moins un élément parmi une session active et un abonnement actif, et,
un moyen de rejet (703) de la demande si l'utilisateur (3) ne possède ni session active et/ou ni abonnement actif.

18. Un système de communication selon la revendication 17, dans lequel le rejet de la demande comprend le rejet de la demande avec une réponse qui lance une procédure de re-sélection d'entité de desserte dans l'entité de commande.

19. Un système de communication comprenant l'entité de commande (5) selon la revendication 12 et une entité de desserte (1, 2), l'entité de desserte (1, 2) comprenant :
un moyen de réception (701), dans la demande reçue associée à l'utilisateur (3), d'informations indiquant l'identité de l'entité de desserte préférée (1) pour l'utilisateur (3).
un moyen de transmission (705) à une entité d'abonnement (6) d'informations indiquant l'identité de l'entité de desserte préférée (1) pour l'utilisateur (3).

20. Un système de communication selon la revendication 19, dans lequel le moyen de transmission (705) de l'entité de desserte (1, 2) est configuré de façon à imbriquer les informations indiquant l'identité de l'entité de desserte préférée (1) dans l'identité de l'entité de desserte (1, 2).

21. Un système de communication selon la revendication 20, dans lequel l'entité de commande (5) comprend en outre un moyen de réception (614) à partir de l'entité d'abonnement (6) d'informations indiquant l'identité de l'entité de desserte préférée (1) pour l'utilisateur (3).

22. Un procédé d'attribution d'une entité de desserte pour un utilisateur, comprenant :
la réception, au niveau d'une première fonction de commande d'état d'appel, à partir d'une deuxième fonction de commande d'état d'appel (1, 5), d'un message de signalisation (115a, 302, 506) associé à un utilisateur (3) et comprenant des informations indiquant que l'utilisateur (3) peut être attribué à une autre entité de desserte, et
la détermination (115b, 303, 507), en réponse à la réception des informations indiquant que l'utilisateur (3) peut être attribué à une autre entité de desserte, si au moins une condition pour l'attribution d'une autre entité de desserte pour l'utilisateur (3) est satisfaite.

23. Le procédé selon la revendication 22 dans lequel le message de signalisation (115a, 302, 506) comprend une demande d'enregistrement (392, 506) ou une réponse (115a) à une demande d'enregistrement.

24. Le procédé selon la revendication 22 ou 23 dans lequel les informations indiquant que l'utilisateur (3) peut être attribué à une autre entité de desserte comprennent une indication qu'une entité de desserte plus favorable est disponible pour la desserte de l'utilisateur (3).

25. Le procédé selon l'une quelconque des revendications 22 à 24, dans lequel la détermination (303, 506) comprend la vérification si l'utilisateur (3) possède des session et/ou des abonnements actifs.

26. Le procédé selon la revendication 22 ou 23, dans lequel la détermination (115b) comprend la vérification si une entité de desserte plus favorable (1, 2) ou une entité de desserte primaire (1, 2) est disponible pour l'utilisateur (3).

27. Le procédé selon l'une quelconque des revendications 22 ou 26, dans lequel l'utilisateur (3) comprend un utilisateur enregistré auprès d'un système de communication.

28. Un produit de programme informatique contenant un moyen de code adapté de façon à produire les étapes selon l'une quelconque des revendications 22 à 27 lorsqu'il est chargé dans la mémoire d'un ordinateur.
